(19) Europäisches Patentamt
European Patent Office
Office européen des brevets

(11) EP 1 212 221 B1

(12) # EUROPÄISCHE PATENTSCHRIFT

(45) Veröffentlichungstag und Bekanntmachung des Hinweises auf die Patenterteilung:
**27.04.2011 Patentblatt 2011/17**

(21) Anmeldenummer: **00954642.5**

(22) Anmeldetag: **22.08.2000**

(51) Int Cl.:
***B60T 7/12*** *(2006.01)* ***B60T 8/24*** *(2006.01)*

(86) Internationale Anmeldenummer:
**PCT/EP2000/008158**

(87) Internationale Veröffentlichungsnummer:
**WO 2001/014185 (01.03.2001 Gazette 2001/09)**

(54) **VERFAHREN UND VORRICHTUNG ZUR KOMPENSATION DES HANGABTRIEBS**

METHOD AND DEVICE FOR COMPENSATING THE DESCENDING FORCE

PROCEDE ET DISPOSITIF DE COMPENSATION DE FORCE DESCENSIONNELLE

(84) Benannte Vertragsstaaten:
**DE GB**

(30) Priorität: **24.08.1999 DE 19939877**
**12.08.2000 DE 10039457**

(43) Veröffentlichungstag der Anmeldung:
**12.06.2002 Patentblatt 2002/24**

(73) Patentinhaber: **Continental Teves AG & Co. oHG**
**60488 Frankfurt (DE)**

(72) Erfinder:
- **FÜHRER, Jochen**
  **D-64287 Darmstadt (DE)**
- **BAITER, Ulrich**
  **D-60489 Frankfurt (DE)**

(56) Entgegenhaltungen:
**WO-A-96/11826** **DE-A- 3 736 807**
**DE-A- 19 637 297** **DE-A- 19 648 559**
**DE-A- 19 835 937** **US-A- 5 514 050**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 212 221 B1

**Beschreibung**

Die Erfindung betrifft ein Verfahren und eine Vorrichtung zur Kompensation des Hangabtriebs während einer HDC(HDC= Hill Descent Control)-Regelung.

Beim Anfahren eines Fahrzeugs am Berg ändern sich die Motorbetriebsbedingungen unter anderem dahingehend, dass der Motor übergeht vom Leerlaufverhalten (unbelasteter Lauf) hin zum Normalbetrieb (belasteter Lauf), indem der Motor das Fahrzeug antreibt, so dass die Motorausgangsleistung größtenteils und insbesondere definiert zum Antreiben des Fahrzeugs verwendet wird. Wenn das Fahrzeug bergabwärts fährt, ist die Geschwindigkeit von der Stellung des Gaspedals, dem eingelegten Gang, dem Motorschleppmoment und dem Gefälle (Fahrbahnneigung) abhängig. Bei steilen Gefällestrecken ist das Motorschleppmoment oftmals nicht ausreichend, um eine kontrollierte Abfahrt zu gestatten. Es sind daher bereits Einrichtungen bekannt, durch welche das Fahrzeug auf einer Gefällestrecke durch ein automatisches Betätigen der Bremsen auf einer konstanten, vom Fahrer gewünschten Geschwindigkeit gehalten werden kann. Derartige Fahrzeuge sind in der Regel mit einem Antiblockiersystem (ABS) sowie mit einer Antriebsschlupfregelung (ASR) ausgerüstet. Die dadurch bereits vorhandenen Baugruppen wie Elektronik, Raddrehzahlsensoren, Längsbeschleunigungssensoren, Magnetregelventile, Motor-PumpenAggregate usw. werden mitbenutzt, um die o.g. Geschwindigkeitsregelung durchzuführen. Durch die bekannten Baugruppen wird der Fahrer auf Gefällestrecken davon entlastet, ständig das Bremspedal betätigen zu müssen. Dabei wird auch bei unterschiedlichen Fahrbahnneigungen eine gleichmäßige Geschwindigkeit eingehalten.

Aus der WO 96/11826 A1 ist es bekannt, ein Fahrzeug mit einer sogenannten Berg-Abfahrts-Regelung auszustatten (auch bezeichnet als HDC = Hill Descent Control). Diese Regelungsart kann vom Fahrer durch einen Schalter eingeschaltet werden. Die o.g. Regelung ist in der Lage, durch eine aktive, fahrerunabhängig geregelte Bremsung das Fahrzeug auf einer steilen Gefällestrecke auf einer konstanten, niedrigen Geschwindigkeit zu halten, ohne dass der Fahrer die Bremsen zu betätigen braucht. Dieses System ist besonders für Geländefahrzeuge vorgesehen, die auf einem Gefälle fahren, bei dem das Motorschleppmoment auch im niedrigsten Gang nicht mehr ausreicht um das Fahrzeug zu verzögern.

Die Regelparameter des vorstehend beschriebenen HDC-Reglers müssen dabei in verschiedenen Fahrsituationen und bei verschieden steilen Fahrbahnneigungen eine komfortable HDC-Regelung ermöglichen. Sie stellen daher einen Kompromiß für die verschiedenen Fahrsituationen und Steigungswinkel der Gefällestrecken dar. Aufgrund der nicht an die spezielle Fahrsituation bzw. die spezielle Fahrbahnneigung angepaßten Regelparameter des HDC-Reglers kommt es daher bei plötzlichen Gefälleänderungen, etwa weil das Fahrzeug über eine Kuppe rollt, zu einem großen Überschwingen über die Sollgeschwindigkeit und zu großen Fahrzeugbeschleunigungen bis zum Erreichen der HDC-geregelten Sollgeschwindigkeit.

Eine hohe Fahrzeugbeschleunigung auf einer steilen Gefällestrecke vermittelt dem Fahrer ein sehr unsicheres Gefühl und wenig Vertrauen in den HDC-Regler.

Der Erfindung liegt die Aufgabe zugrunde, ein Verfahren und eine Vorrichtung der eingangs genannten Art anzugeben, mittels denen ein Fahrzeug mit HDC-Regelung beim Fahren bergabwärts komfortabler geregelt werden kann.

Diese Aufgabe wird erfindungsgemäß mit den Merkmalen der unabhängigen Ansprüche gelöst. Abhängige Ansprüche sind auf bevorzugte Ausführungsformen der Erfindung gerichtet.

Erfindungsgemäß sieht das gattungsgemäße Verfahren eine Erhöhung, vorzugsweise eine Addition, eines von der HDC-Regelung ermittelten Bremsdrucks um einen Kompensationsbremsdruck nach Maßgabe der Fahrbahnneigung (sin $\alpha$)vor, und die Beeinflussung der Betriebsbremse mit der Summe der Bremsdrücke.

Hierdurch ist eine gezielte Verringerung der Fahrzeuggeschwindigkeit beim Wechsel der Fahrbahnneigung (Steigung/Gefälle) beim Fahren bergabwärts möglich. Dadurch wird während der Regelung des HDC-Reglers in Abhängigkeit von der Fahrbahnneigung ein Bremsdruck in den Betriebsbremsen aufgebaut, der im Teilbremsbereich dafür sorgt, dass die Beschleunigung und die Geschwindigkeit des Fahrzeugs am Anfang sehr steiler Gefällestrecken reduziert wird, wenn der Fahrer das Fahrzeug dem HDC-Regler überläßt. Eine verringerte Fahrzeugbeschleunigung und -geschwindigkeit beim Wechsel zu einer steilen Fahrbahnneigung vermittelt dem Fahrer ein sehr sicheres Gefühl und Vertrauen in den HDC-Regler. Hinzu kommt, dass sich die Sollgeschwindigkeit des HDC-Reglers ohne größeres Überschwingen einstellt.

Gegenstand der Erfindung ist ferner ein HDC-Regler mit einer Gefällekompensationseinrichtung, zur Erhöhung des HDC-Bremsdruckes nach Maßgabe der Fahrbahnneigung.

Durch die erfindungsgemäß vorgesehene Gefällekompensationseinrichtung bei einem HDC-Regler, wird am Anfang der Fahrt des Fahrzeugs bergabwärts der Bremsdruck so beeinflusst, dass eine stärkere Reduzierung der Fahrzeuggeschwindigkeit und der Beschleunigung erreicht wird.

Während der Fahrt des Fahrzeugs wird die Fahrbahnneigung aus den Signalen des Längsbeschleunigungs-

sensors $a_{sensor}$ und mindestens eines Radsensors $a_{Rad} = \frac{dv}{dt}$ oder $a_{Rad} = \frac{d\omega}{dt} * r$ , mit v = Raddrehzahl, $\omega$ = Winkelgeschwindigkeit, r=Radradius, bestimmt.

Aus den ermittelten Beschleunigungswerten $a_{sensor}$ und $a_{Rad}$ wird nach vorzeichenrichtiger Summation die Fahrbahnneigung nach Maßgabe der Erdbeschleunigungskomponente in Fahrbahnlängsrichtung wie folgt bestimmt:

$a_{Sensor}$ = gemessener Wert der Erdbeschleunigungskomponente bei Fahrzeugstillstand bzw nahezu Fahrzeugstillstand $a_{Sensor} - a_{Rad}$ = ermittelter wert der Erdbeschleunigungskomponente in Vorwärtsfahrt (eingelegter lter Gang) $a_{Sensor} + a_{Rad}$ = ermittelter Wert der Erdbeschleunigungskomponenete in Rückwärtsfahrt (eingelegter Rückwärtsgang)

Die Erdbeschleunigungskompomente oder davon abgeleitete Größen, können einzeln oder in Kombination zur Schätzung oder Ermittlung der Fahrbahnneigung bzw. des Gefälles bzw. der Fahrzeugneigung und dergleichen herangezogen werden.

Ein Kompensationsbremsdruck wird immer dann zu dem vom der HDC-Regelung ermittelten Bremsdruck des Bremsfluids addiert, wenn ein Vergleichsergebnis von

$$\sin\alpha = (a_{Sensor} - a_{Rad}) / g \leq S_{1/2V}$$

oder

$$\sin\alpha = (a_{Sensor} + a_{Rad}) / g \geq S_{1/2R}$$

mit $S_{1/2roadgradV/R}$= Schwellenwert (e) der Fahrbahnneigung bei Vorwärts- oder Rückwärtsfahrt, $a_{Sensor}$= gemessene Längsbeschleunigung des Fahrzeugs bei $V_{Fahrzeug} \geq 1$km/h, $a_{Rad}$ = Radbeschleunigung, $\sin\alpha$ = geschätzte Fahrbahnneigung, g= Erdbeschleunigung, vorliegt. Zweckmäßiger Weise wird der Kompensationsbremsdruck in Abhängigkeit von einem zur Kompensation des Hangabtriebs bestimmten Grenzbremsdruck zu dem HDC-Bremsdruck addiert, bis die Summe aus dem HDC-Bremsdruck und dem Kompensationsbremsdruck den zur Kompensation des Hangabtriebs bestimmten Grenzbremsdruck erreicht. Darüber hinaus wird der Kompensationsbremsdruck auch nach Maßgabe der Istbeschleunigung so lange zu dem HDC-Bremsdruck addiert, bis eine Abnahme der Istbeschleunigung des Fahrzeugs ermittelt wird. Der Grenzbremsdruck wird nach den folgenden Beziehungen ermittelt:

$$P_{compV} = |\sin\alpha| * K_1$$

oder

$$P_{compR} = |\sin\alpha| * K_1$$

mit $P_{compV}$ = Grenzbremsdruck bei Vorwärtsfahrt,
$P_{compR}$ = Grenzbremsdruck bei Rückwärtsfahrt,
$\sin\alpha$ = Fahrbahnneigung, $K_1$ = Bremsdruckkonstante. Der Wert der Bremsdruckkonstanten $K_1$ wird erhöht, wenn ein zweiter Schwellenwert

$$\sin\alpha \leq S_{2V} \quad \text{vorwärts}$$

$$\sin\alpha \geq S_{2R} \quad \text{rückwärts}$$

der Fahrbahnneigung $\sin\alpha$ erreicht oder überschritten wird.

Der Wert der Schwellenwerte $S_{1/2(V/R)}$ wird nach Maßgabe der Fahrrichtung "VORKÄRTS" oder "RÜCKWÄRTS" bestimmt.

Der Kompensationsbremsdruck wird nach der folgenden Beziehung ermittelt:

$P_{addcomp} = K_2 * ( P_{comp} - P_{sollold)}$, mit $P_{addcomp}$ = Kompensationsbremsdruck, $K_t$ = Anteilsfaktor des Grenzbremsdrucks $P_{comp}$, $P_{sollold}$ = HDC-Bremsdruck vor der aktuellen Druckerhöhung $P_{soll}$. Wesentlich für die Kompensationsbremsdruckperechnung ist dabei der Wert vor der aktuellen Druckerhöhung $P_{sollolg}$. Nach einem weiteren Ausführungsbeispiel wird die von dem HDC-Regler ermittelte Druckerhöhung mindestens verdoppelt 2* ($P_{soll}$-$P_{sollold}$).

Bei starker Zunahme der Fahrbahnneigung nach den Beziehungen
$d(\sin\alpha)/dt \geq S_{3R}$ (S>o) bei Rückwärtsfahrt
$d(\sin\alpha)/dt \leq S_{3V}$ (S<o) bei Vowärtsfahrt
mit $S_{3/V/R}$ = dritter Schwellenwert (beispielsweise zwischen
0,2 und + 0, $3s^{-1}$) bei Vorwärts- oder Rückwärtsfahrt
und einem Überschreiten der Sollgeschwindigkeit der HDC-Regelung nach der Beziehung $V_{ist} \geq V_{soll}-K_v$, mit $V_{ist}$ = Istgeschwindigkeit, $V_{soll}$ = Sollgeschwindigkeit, $K_v$ = Geschwindigkeitskonstante, wird der Kompensationsbremsdruck $P_{addcomp}$ zu dem vom HDC-Regler ermittelten Bremsdruck addiert oder die Bedingung 2 x $P_{soll}$ - $P_{sollold}$ ausgelöst.

Ein Ausführungsbeispiel der Erfindung ist in der Zeichnung dargestellt und wird im folgenden näher beschrieben: Es zeigen:

Fig. 1 schematisch ein Blockschaltbild einer Vorrichtung zum Unterstützen einer HDC-Regelung
Fig. 2 schematisch ein Blockschaltbild einer Vorrichtung zum Unterstützen einer HDC-Regelung nach Regelungseintritt beim Fahren

Fig. 1 zeigt schematisch ein Blockschaltbild einer Vorrichtung 9 zum Unterstützen einer HDC-Regelung während des Fahrens eines Fahrzeugs bergabwärts. Der HDC-Regeler 15, wie er in der WO 96/11862 beschrieben ist, hält die Fahrzeuggeschwindigkeit bei einer Bergfahrt durch Beeinflussung der Betriebsbremse 17 konstant. Die HDC-Regelung ist als Kaskade aus Geschwindigkeits- und Beschleunigungsregler aufgebaut. Der überlagerte Regelkreis ist der Geschwindigkeitsregler. Die Fahrzeugsollgeschwindigkeit $v_{Soll}$ errechnet sich aus einer gang- und geländeabhängigen Basisgeschwindigkeit und einem fahrerpedalabhängigen Anteil. Als Fahrzeugistgeschwindigkeit $v_{Ist}$ wird antriebsabhängig das schnellste oder langsamste Rad betrachtet. Ausgangsgrösse der Geschwindigkeitsregelung ist die Sollbeschleunigung $a_{Soll.}$ Die Istbeschleunigung $a_{Ist}$ wird aus der ABS-Fahrzeugbeschleunigung oder, bei erkanntem Radschlupf, aus der Änderung der HDC-Fahzeugistgeschwindigkeit $\frac{dv_{Ist}}{dt}$ ermittelt. Über die Ansteuerung der Trenn- und Schaltventile einer bekannten Bremsanlage erfolgt die Beeinflussung des Bremsdrucks. Solange eine Druckanforderung vorlieg, läuft die Pumpe getaktete. Die Vorrichtung 9 weist eine Ermittlungseinheit 10 zum Ermitteln der Fahrbahnneigung (Gefälleberechnung) auf, der als Eingangsgrößen die Signale eines Längsbeschleunigungssensors und die Fahrzeuggeschwindigkeit zur Verfügung gestellt werden. Die Fahrzeugbeschleunigung wird dabei bevorzugt über das Radverhalten abtastende Sensoren (Raddrehzahlsensoren) in einem ABS-Regler oder von dem HDC-Regler 15 nach der Beziehung $\frac{dv_{Ist}}{dt}$ aus den Radsignalen berechnet. Die Ermittlungseinheit 10 bestimmt die Fahrbahnneigung (Gefälle) bis aus den Signalen des Längsbeschleunigungssensors (G-Sensor)und der Fahrzeugbeschleunigung nach Maßgabe der Signale des Radsensors. Eine vorzeichenrichtige Summation der ermittelten Beschleunigungswerte von $a_{Sensor}$-$a_{Rad}$ oder $a_{Sensor}$+$a_{Rad}$ dient der Bestimmung der Erdbeschleunigungskomponente bei einer Fahrzeuggeschwindigkeit, bei der verwertbare Radsignale vorliegen. Aus der Erdbeschleunigungskomponente nach der Beziehung $a_{Sensor}$-$a_{Rad}$ oder $a_{Sensor}$+$a_{Rad}$ wird die Fahrbahnneigung (sin $\alpha$) geschätzt. In einer Vergleichseinheit 7 wird die nach Maßgabe der Erdbeschleunigungskomponente geschätzte Fahrbahnneigung mit vorgegebenen Schwellenwerten 6 verglichen. Beim Erreichen oder Überschreiten der Schwellenwerte schaltet eine Ein- und Ausschaltlogik 11 eine Beeinflussungseinheit 5 aktiv oder inaktiv, die den Druckaufbau in der Betriebsbremse 17 steuert. Die Beeinflussungseinheit 5 kann Bestandteil des HDC-Reglers 15 sein oder als separate Gefällekompensationseinrichtung 14 ausgebildet sein.

Figur 2 zeigt in schematischer Darstellung eine detalliertere Vorrichtung 9, die den HDC-Regler 15 nach Eintritt in die Regelungsphase unterstützt. Die HDC-Regelung weist eine HDC-Gefällekompensationseinrichtung 14 auf, der die Ermittlungseinheit 10 zur Ermittlung der Fahrbahnneigung aus den Eingangsgrößen Längsbeschleunigung und Fahrzeuggeschwindigkeit ein Gefällesignal liefert. Die geschätzte Fahrbahnneigung (Gefälle) wird zusammen mit einer Bremsbetätigungserkennung 12 in der Ein-/Ausschaltlogik 11 mit mindestens einem Schwellenwert verglichen und die Vorrichtung 14 aktviert, wenn $\sin\alpha = (a_{Sensor} - a_{Rad}) / g \leq S_{1/2V}$ oder $\sin\alpha = (a_{Sensor} + a_{Rad}) / g \geq S_{1/2R}$ ist. Der Eintritt des HDC-Regler 15 in die Regelung ist zu diesem Zeitpunkt bereits erfolgt. Eine Aktivierung der Gefällekompensationseinrichtung 14 kann auch erfolgen, wenn sich während der HDC-Regelung die geschätzte Fahrbahnneigung sehr schnell ändert und mindestens ein Schwellenwert erreicht oder überschritten wird.

Die aktivierte Gefällekompensationseinrichtung 14 berechnet Bremsdrucksollwerte nach der folgenden Regelphilosophie.

In der Gefällekompensation 14 werden zu den normalen Druckaufbauten in der Betriebsbremse 17 durch den HDC-Regler 15 Druckerhöhungen addiert. Dabei wird bei einem Vergleichsergebnis von

$$\sin\alpha = (a_{Sensor} - a_{Rad}) / g \leq S_{1/V} \text{ (negativer Zahlenwert)}$$

oder

$$\sin\alpha = (a_{Sensor} + a_{Rad}) / g \geq S_{1/R} \text{ (positiver Zahlenwert)}$$

mit $S_{1/V/R}$= erster Schwellenwert der Fahrbahnneigung bei Vorwärts- oder Rückwärtsfahrt, $a_{Sensor}$= Längsbeschleunigung des Fahrzeugs bei $V_{Fahrzeug} \geq 1$km/h, $a_{Rad}$ = Radbeschleunigung, $\sin\alpha$ = geschätzte Fahrbahnneigung (Sinus des Steigungswinkels$\alpha$), g = Erdbeschleunigung, zu dem vom der HDC-Regelung ermittelten Bremsdruck des Bremsfluids ein von der Fahrbahnneigung abhängiger Kompensationsbremsdruck addiert. Bei $\sin\alpha > 0$ erfolgt eine Fahrt bergauf in Fahrzeuglängsrichtung (relavant für eine Rückwärtsfahrt), bei $\sin\alpha < 0$ erfolgt eine Fahrt bergab in Fahrzeuglängsrichtung (relevant für eine Vorwärtsfahrt)

Der Kompensationsbremsdruck wird in Abhängigkeit von einem zur Kompensation des Hangabtriebs bestimmten Grenzbremsdruck zu dem HDC-Bremsdruck addiert, bis die Summe aus dem HDC-Bremsdruck und dem Kompensationsbremsdruck den zur Kompensation des Hangabtriebs bestimmten Grenzbremsdruck erreicht oder eine Abnahme der Istbeschleunigung des Fahrzeugs ermittelt wird. Der Grenzbremsdruck wird dabei nach Maßgabe der Fahrtrichtung nach den folgenden Beziehungen ermittelt:

$$P_{compV} = \sin\alpha * K_{1V} \quad (K<0) \text{ vorwärts}$$

oder

$$P_{compF} = \sin\alpha * K_{1R} \quad (K>0) \text{ rückwärts}$$

mit $P_{compV}$ = Grenzbremsdruck bei Vorwärtsfahrt, $P_{compR}$ = Grenzbremsdruck bei Rückwärtsfahrt, $\sin\alpha$ - Fahrbahnneigung, $K_{V/R/1}$ = Bremsdruckkonstante. Der Wert der Bremsdruckkonstanten $K_{1/V/R}$, z.B. 100bar, wird erhöht, wenn ein zweiter Schwellenwert der Fahrbahnneigung $S_{V/R/2}$,der eine bis zu dem Faktor 5 größere Fahrbahnneigung wiedergibt, überschritten ist.

Die Differenz zwischen dem aktuellen Bremsdruck des HDC-Reglers und dem von der Gefällekompensation 14 ermittelten Kompensationsbremsdruck wird in jeder Druckstufe anteilsmäßig durch Druckerhöhung kompensiert. Der Kompensationsbremsdruck wird nach der folgenden Beziehung ermittelt:

$P_{addcomp} = K_2 * (P_{comp} - P_{sollold})$, mit $P_{addcomp}$ = Kompensationsbremsdruck, $K_2$ = Anteilsfaktor des Grenzbremsdrucks $P_{comp}$, $P_{sollold}$ = HDC-Bremsdruck vor der aktuellen Druckerhöhung $P_{soll}$.

Wesentlich für die Kompensationsbremsdruckberechnung ist dabei der Wert $P_{sollold}$ vor der aktuellen Druckerhöhung $P_{soll.}$ Nach einem weiteren Ausführungsbeispiel wird die von dem HDC-Regler ermittelte Druckerhöhung mindestens verdoppelt 2* ($P_{soll}$-$P_{sollold}$).

Die Erhöhung des von der HDC-Regelung vor der aktuellen Druckerhöhung ermittelten Bremsdruckes $P_{sollold}$ um einen Kompensationsbremsdruck nach Maßgabe der Fahrbahnneigung erfolgt daher nach der folgenden Beziehung:

$$P_{addcomp} = MAX[(0;\ K_2 * (P_{comp} - P_{sollold}));2* \ (p_{soll}-P_{sollold})]$$

Bei starker Zunahme der Fahrbahnneigung nach den Beziehungen

$$d(\sin\alpha)/dt \geq S_{3R} \quad (S>o) \quad \text{bei Rückwärtsfahrt}$$

$$d(\sin\alpha)/dt \leq S_{3V} \quad (S<o) \quad \text{bei Vowärtsfahrt}$$

und einem Überschreiten der Sollgeschwindigkeit der HDC-Regelung nach der Beziehung $v_{Ist} \geq v_{Soll}$-$K_v$ , mit $V_{Ist}$ = Istgeschwindigkeit, $V_{soll}$ = Sollgeschwindigkeit, $K_v$ = Geschwindigkeitskonstante, wird der Kompensationsbremsdruck $P_{addcomp}$ zu dem vom HDC-Regler ermittelten Bremsdruck addiert oder die Bremsdruckanforderung des HDC-Reglers 15 erhöht, z.B.doppelte Verstärkung des Beschleunigungsreglers. Abgeschaltet wird die Kompensation, sobald die Fahrzeugbeschleunigung negativ wird, d.h. die Istgeschwindigkeit sich wieder an die Sollgeschwindigkeit annähert.

Der in die Betriebsbremse einzusteuernde Bremsdruck wird über das zum Solldruck korrespondierende Volumen durch Berechnung in einem dem HDC-Regler 15 zugeordneten Druckmodell bestimmt und der Gefällekompensation 14 zur Verfügung gestellt. Die Differenz des berechneten Modellvolumens zu dem Sollvolumen, ergibt die geforderte Volumenänderung. Der Solldruck wird dabei aus der zu ihm korrelierenden Regelabweichung der Beschleunigung $a_{Soll}$-$a_{Ist}$ ermittelt.

## Patentansprüche

1. Verfahren zur Kompensation des Hangantriebs während einer HDC-Regelung, bei der die Geschwindigkeit eines auf einer Gefällestrecke fahrenden Fahrzeugs auf eine vorgegebene Geschwindigkeit geregelt wird, indem in die Bremsen des Fahrzeugs beim Überschreiten der vorgegebenen Geschwindigkeit ein von der HDC-Regelung ermittelter Bremsdruck fahrerunabhängig eingesteuert wird, **gekennzeichnet durch** die Schritte

   - Ermitteln der Fahrzeugneigung
   - Ermitteln eines Kompensationsbremsdruckes aus der ermittelten Fahrzeugneigung
   - Erhöhung des von der HDC-Regelung ermittelten Bremsdrucks um den Kompensationsbremsdruck und
   - Beeinflussen der Betriebsbremse mit der Summe der Bremsdrücke.

2. Verfahren nach Anspruch 1, **dadurch gekennzeichnet, dass** die Fahrzeugneigung aus den Signalen eines Beschleunigungssensors und eines Radsensors ermittelt wird.

3. Verfahren nach Anspruch 2, **dadurch gekennzeichnet, dass** aus den Signalen des Beschleunigungssensors und des Radsensors die Erdbeschleunigungskomponente in Fahrzeugrichtung ermittelt wird und/oder nach einer vorzeichenrichtigen Summation der ermittelten Beschleunigungswerte von $a_{Sensor}$-$a_{Rad}$ oder $a_{Sensor}$+$a_{Rad}$ die Fahrzeugneigung (sin $\alpha$) geschätzt wird.

4. Verfahren nach einem der Ansprüche 1 bis 3, **dadurch gekennzeichnet, dass** bei einem Vergleichsergebnis von

$$\sin\alpha = (a_{Sensor} - a_{Rad}) / g \leq S_{1v}$$

oder

$$\mathrm{Sin}\ \alpha = (a_{Sensor} + a_{Rad}) / g \geq S_{1R}$$

mit $S_{1V/R}$= Schwellenwert der Fahrzeugneigung bei Vorwärts- oder Rückwärtsfahrt, $a_{Sensor}$= Längsbeschleunigung des Fahrzeugs bei $V_{Fahrzeug} \geq 1$km/h, $a_{Rad}$ = Radbeschleunigung, sin $\alpha$ = geschätzte Fahrzeugneigung, g = Erdbeschleunigung 9,81 $ms^2$, der von der Fahrzeugneigung abhängige Kompensationsbremsdruck aufaddiert wird.

**5.** Verfahren nach einem der Ansprüche 1 bis 4, **dadurch gekennzeichnet, dass** der Kompensationsbremsdruck in Abhängigkeit von einem zur Kompensation des Hangabtriebs bestimmten Grenzbremsdruck zu dem HDC-Bremsdruck addiert wird, bis die Summe aus dem HDC-Bremsdruck und dem Kompensationsbremsdruck den zur Kompensation des Hangabtriebs bestimmten Grenzbremsdruck erreicht.

**6.** Verfahren nach einem der Ansprüche 5, **dadurch gekennzeichnet, dass** der Kompensationsbremsdruck in Abhängigkeit von der Istbeschleunigung zu dem HDC-Bremsdruck addiert wird, bis eine Abnahme der Istbeschleunigung des Fahrzeugs ermittelt wird.

**7.** Verfahren nach einem der Ansprüche 6, **dadurch gekennzeichnet, dass** der Grenzbremsdruck nach den folgenden Beziehungen ermittelt wird:

$$P_{compV} = \sin\ \alpha * K_{1V}$$

oder

$$P_{compR} = \sin\ \alpha * K_{1R}$$

mit $P_{compV}$ = Grenzbremsdruck bei Vorwärtsfahrt, $P_{compR}$ = Grenzbremsdruck bei Rückwärtsfahrt, sin $\alpha$ = Fahrzeugneigung, $K_{1V/R}$ = Bremsdruckkonstante bei Vorwärts- oder Rückwärtsfahrt.

**8.** Verfahren nach einem der Ansprüche 7, **dadurch gekennzeichnet, dass** der Wert der Bremsdruckkonstanten $K_1$ erhöht wird, wenn ein zweiter Schwellenwert

$$\sin\alpha \leq S_{2V} \quad \text{vorwärts}$$

$$\sin\alpha \geq S_{2R} \quad \text{rückwärts}$$

der Fahrzeugneigung erreicht oder überschritten wird.

**9.** Verfahren nach einem der Ansprüche 4 oder 8, **dadurch gekennzeichnet, dass** der Wert der Schwellenwerte $S_{V/R}$ in Abhängigkeit von der Fahrrichtung "VORWÄRTS" oder "RÜCKWÄRTS" bestimmt wird.

**10.** Verfahren nach einem der Ansprüche 1 bis 9, **dadurch gekennzeichnet, dass** der Kompensationsbremsdruck nach der folgenden Beziehung ermittelt wird:

$P_{addcomp} = K_2 * (P_{comp} - P_{sollold})$, mit $P_{addcomp}$ = Kompensationsbremsdruck, $K_2$ = Anteilsfaktor des Grenzbremsdrucks $P_{comp}$, $P_{sollold}$ = HDC-Bremsdruck vor der aktuellen Druckerhöhung $P_{Soll}$.

11. Verfahren nach einem der Ansprüche 1 bis 10, **gekennzeichnet durch** die Anwendung bei einer Zunahme der Fahrzeugneigung

$$d(\sin\alpha)/dt \geq S_{3R} \quad S>o \quad \text{bei Rückwärtsfahrt}$$

$$d(\sin\alpha)/dt \leq S_{3V} \quad S<o, \quad \text{bei Vowärtsfahrt}$$

und einem Überschreiten der Sollgeschwindigkeit der HDC-Regelung.

12. HDC-Regler, der die Geschwindigkeit eines auf einer Gefällestrecke fahrenden Fahrzeugs auf eine vorgegebene Geschwindigkeit regelt, indem in die Bremsen des Fahrzeugs beim Überschreiten der vorgegebenen Geschwindigkeit ein von der HDC-Regelung ermittelter Bremsdruck fahrerunabhängig eingesteuert wird, **dadurch gekennzeichnet, dass** dieser

   - eine Ermittlungseinheit (10) zum Ermitteln der Fahrzeugneigung,
   - eine Gefällekompensationseinrichtung (14) zum Ermitteln eines Kompensationsbremsdruckes nach Maßgabe der Fahrzeugneigung und zur Erhöhung des von der HDC-Regelung ermittelten Bremsdrucks um den Kompensationsbremsdruck, sowie
   - eine Beeinflussungseinheit (5) zum Beeinflussen der Betriebsbremse mit der Summe der Bremsdrücke aufweist.

13. Vorrichtung nach Anspruch 12, **dadurch gekennzeichnet, dass** die Ermittlungseinheit (10) zum Ermitteln der Fahrzeugneigung mindestens einen Längsbeschleunigungssensor und einen Raddrehzahlsensor aufweist, und aus den Sensorsignalen eine Erdbeschleunigungskomponente oder davon abgeleitete Größen, wie Fahrzeugneigung oder Gefälle bestimmt, dass eine Vergleichseinheit (7) vorgesehen ist, in der ein Vergleich der Fahrzeugneigung mit mindestens einem Schwellenwert erfolgt, dass eine Ein- und Ausschaltlogik (11) vorgesehen ist, die in Abhängigkeit von dem Vergleichsergebnis die Beeinflussungseinheit (5) für die Betriebsbremse aktiv oder inaktiv schaltet, und
dass die Beeinflussungseinheit (5) eine Gefällekompensationseinheit (14) aufweist, die den Kompensationsdruck ermittelt und auf den HDC-Bremsdruck der Betriebsbremse aufaddiert.

## Claims

1. Method for compensating the downhill slope force during an HDC control system, in the case of which the speed of a vehicle driving on a section of road with negative gradient is controlled to a prescribed speed by there being applied independently of the driver to the brakes of the vehicle upon overshooting of the prescribed speed a brake pressure determined by the HDC control system, **characterized by** the steps of

   - determining the vehicle inclination,
   - determining a compensation brake pressure from the determined vehicle inclination,
   - increasing the brake pressure determined by the HDC control system by the compensation brake pressure, and
   - influencing the service brake with the sum of the brake pressures.

2. Method according to Claim 1, **characterized in that** the vehicle inclination is determined from the signals of an acceleration sensor and a wheel sensor.

3. Method according to Claim 2, **characterized in that** the gravity acceleration component in the vehicle direction is determined from the signals of the acceleration sensor and of the wheel sensor, and/or the vehicle inclination (sin $\alpha$) is estimated in accordance with an algebraic summation of the determined acceleration values of $a_{Sensor}-a_{Wheel}$ or $a_{Sensor}+a_{Wheel.}$

4. Method according to one of Claims 1 to 3, **characterized in that**, in the event of a comparison result of sin $\alpha = (a_{Sensor}-a_{Wheel})/g \leq S_{1F}$ or

$$\mathrm{Sin}\ \alpha = (a_{Sensor}+a_{Wheel})/g \leq S_{IR},$$

where $S_{1F/R}$ = threshold value of the vehicle inclination for Forward or Reverse travel, $a_{sensor}$ = longitudinal acceleration of the vehicle for $V_{Vehicle} \geq 1$ km/h, $a_{Wheel}$ = wheel acceleration, sin $\alpha$ = estimated vehicle inclination, g = gravitational acceleration 9.81 $ms^2$, the compensation brake pressure dependent on the vehicle inclination is added on.

5. Method according to one of Claims 1 to 4, **characterized in that** the compensation brake pressure is added to the HDC brake pressure as a function of a limiting brake pressure, which is intended to compensate for the downhill slope force, until the sum of the HDC brake pressure and the compensation brake pressure reaches the limiting brake pressure which is intended to compensate for the downhill slope force.

6. Method according to Claim 5, **characterized in that** the compensation brake pressure is added to the HDC brake pressure as a function of the actual acceleration until a decrease in the actual acceleration of the vehicle is determined.

7. Method according to Claim 6, **characterized in that** the limiting brake pressure is determined according to the following relationships:

$$P_{compF} = \sin\alpha * K_{1F}$$

or

$$P_{compR} = \sin\alpha * K_{1R},$$

where $P_{compF}$ = limiting brake pressure for forward travel, $P_{compR}$ = limiting brake pressure for reverse travel, sin $\alpha$ = vehicle inclination, $K_{1F/R}$ = brake pressure constant for forward or reverse travel.

8. Method according to Claim 7, **characterized in that** the value of the brake pressure constant $K_1$ is increased when a second threshold value

$$\sin\alpha \leq S_{2F} \quad \text{forward}$$

$$\sin\alpha \geq S_{2R} \quad \text{reverse}$$

of the vehicle inclination is reached or exceeded.

9. Method according to either of Claims 4 or 8, **characterized in that** the value of the threshold values $S_{F/R}$ is determined as a function of the direction of travel "FORWARD" or "REVERSE".

10. Method according to one of Claims 1 to 9, **characterized in that** the compensation brake pressure is determined according to the following formulation:

$P_{addcomp} = K_2 * (P_{comp} - P_{setpoint})$, where $P_{addcomp}$ = compensation brake pressure, $K_2$ = proportionality factor of the limiting brake pressure $P_{comp}$, $P_{setpoint}$ = HDC brake pressure before the current increase in pressure $P_{set}$.

**11.** Method according to one of Claims 1 to 10, **characterized by** the application in the event of an increase in the vehicle inclination of

$$d(\sin\alpha)/dt \geq S_{3R}\ S>o \text{ for reverse travel}$$

$$d(\sin\alpha)/dt \leq S_{3V}\ S<o \text{ for forward travel,}$$

and overshooting of the setpoint speed of the HDC control system.

**12.** HDC controller which controls the speed of a vehicle driving on a section of road with negative gradient to a prescribed speed by there being applied independently of the driver to the brakes of the vehicle upon overshooting of the prescribed speed a brake pressure determined by the HDC control system, **characterized in that** said controller has

- a determination unit (10) for determining the vehicle inclination,
- a negative gradient compensation device (14) for determining a compensation brake pressure according to the vehicle inclination, and for increasing the brake pressure determined by the HDC control system by the compensation brake pressure, and
- an influencing unit (5) for influencing the service brake with the sum of the brake pressures.

**13.** Device according to Claim 12, **characterized in that** the determination unit (10) for determining the vehicle inclination has at least one longitudinal acceleration sensor and a wheel speed sensor, and determines a gravitational acceleration component or values derived therefrom, such as vehicle inclination or negative gradient, from the sensor signals, **in that** a comparison unit (7) is provided in which a comparison of the vehicle inclination with at least one threshold value is performed, **in that** a switch-on and switch-off electric unit (11) is provided which switches the influencing unit (5) for the service brake to be active or inactive as a function of the comparison result, and **in that** the influencing unit (5) has a negative gradient compensation unit (14) which determines the compensation pressure and adds it onto the HDC brake pressure of the service brake.

## Revendications

**1.** Procédé de compensation de la poussée d'une descente pendant une régulation HDC, dans laquelle la vitesse d'un véhicule qui circule sur une pente descendante est régulée à une vitesse prédéterminée en commandant indépendamment du conducteur une pression de freinage déterminée par la régulation HDC dans les freins du véhicule lorsque la vitesse prédéterminée est dépassée,
le procédé étant **caractérisé par** les étapes qui consistent à :

- déterminer la pente du véhicule,
- déterminer une pression de freinage de compensation à partir de la pente du véhicule qui a été déterminée,
- ajouter la pression de freinage de compensation à la pression de freinage déterminée par la régulation HDC et
- agir sur les freins de service par la somme des pressions de freinage.

**2.** Procédé selon la revendication 1, **caractérisé en ce que** la pente du véhicule est déterminée à partir des signaux d'un détecteur d'accélération et d'un détecteur de roue.

**3.** Procédé selon la revendication 2, **caractérisé en ce que** la composante d'accélération due à la gravité dans la direction du véhicule est déterminée à partir des signaux du détecteur d'accélération et du détecteur de roue et/ou **en ce que** la pente du véhicule (sin $\alpha$) est estimée en ajoutant en intégrant les signes $a_{Sensor}$ - $a_{Rad}$ ou $a_{Sensor}$ + $a_{Rad}$ aux valeurs déterminées pour l'accélération.

4. Procédé selon l'une des revendications 1 à 3, **caractérisé en ce que** si le résultat de la comparaison sin $\alpha = (a_{Sensor} - a_{Rad}) /g \leq S_{1V}$ ou sin $\alpha = (a_{Sensor} + a_{Rad}) /g \geq S_{1R}$, avec $S_{1V/R}$ = valeur de seuil de la pente du véhicule pour un déplacement vers l'avant V ou vers l'arrière R, $a_{Sensor}$ = accélération longitudinale du véhicule pour $V_{Fahrzeug} \geq 1$ km/h, $a_{Rad}$ = accélération de la roue, $\alpha$ = pente estimée du véhicule, g = accélération de la gravité 9,81 $m/s^2$, la pression de freinage de compensation qui dépend de la pente du véhicule est ajoutée.

5. Procédé selon l'une des revendications 1 à 4, **caractérisé en ce que** la pression de freinage de compensation est ajoutée à la pression de freinage HDC en fonction d'une pression de freinage limite déterminée pour compenser la poussée due à la pente, jusqu'à ce que la somme de la pression de freinage HDC et de la pression de freinage de compensation atteigne la pression de freinage limite déterminée pour compenser la poussée due à la pente.

6. Procédé selon la revendication 5, **caractérisé en ce que** la pression de freinage de compensation est ajoutée à la pression de freinage HDC en fonction de l'accélération effective jusqu'à ce qu'une diminution de l'accélération effective du véhicule ait été déterminée.

7. Procédé selon la revendication 6, **caractérisé en ce que** la pression de freinage limite est déterminée par les équations suivantes :

$$P_{compV} = \sin \alpha * K_{1V}$$

ou

$$P_{compR} = \sin \alpha * K_{1R}$$

dans lesquelles $P_{compV}$ = pression de freinage limite dans un déplacement vers l'avant, $P_{compR}$ = pression de freinage limite dans un déplacement vers l'arrière, sin $\alpha$ = pente du véhicule et $K_{1V/R}$ = constante de pression de freinage pour un déplacement vers l'avant ou un déplacement vers l'arrière.

8. Procédé selon la revendication 7, **caractérisé en ce que** la valeur de la constante de pression de freinage $K_1$ est augmentée si une deuxième valeur de seuil
sin $\alpha \leq S_{2V}$ vers l'avant
sin $\alpha \geq S_{2R}$ vers l'arrière
de la pente du véhicule est atteinte ou dépassée.

9. Procédé selon l'une des revendications 4 ou 8, **caractérisé en ce que** la valeur des valeurs de seuil $S_{V/R}$ est déterminée en fonction de la direction de déplacement "VERS L'AVANT" ou "VERS L'ARRIERE".

10. Procédé selon l'une des revendications 1 à 9, **caractérisé en ce que** la pression de freinage de compensation est déterminée par l'équation suivante :

$$P_{addcomp} = K_2 * (P_{comp} - P_{soll\ old}),$$

dans laquelle $P_{addcomp}$ = pression de freinage de compensation, $K_2$ = facteur de division de la pression de freinage limite $P_{comp}$ et $P_{soll\ old}$ = pression de freinage HDC avant l'augmentation effective de pression $P_{soll}$.

11. Procédé selon l'une des revendications 1 à 10, **caractérisé par** l'utilisation de
d (sin $\alpha$)/dt $\geq S_{3R}$ S>0 pour un déplacement vers l'arrière et de d(sin $\alpha$)/dt $\leq S_{3V}$ S>0 pour un déplacement vers l'avant en cas d'augmentation de la pente du véhicule et de dépassement de la vitesse de consigne de la régulation HDC.

12. Régulateur qui régule à une vitesse prédéterminée la vitesse d'un véhicule qui se déplace sur une pente, dans lequel une pression de freinage déterminée par la régulation HDC est réglée indépendamment du conducteur dans les freins du véhicule lorsque la vitesse prédéterminée est dépassée,
**caractérisé en ce que** ce régulateur présente

- une unité de détermination (10) qui détermine la pente du véhicule,
- un dispositif (14) de compensation de pente qui détermine une pression de freinage de compensation en fonction de la pente du véhicule et qui ajoute la pression de freinage de compensation à la pression de freinage déterminée par la régulation HDC, ainsi que
- une unité d'action (5) qui agit sur les freins de service par la somme des pressions de freinage.

**13.** Dispositif selon la revendication 12, **caractérisé en ce que** l'unité de détermination (10) qui détermine la pente du véhicule présente au moins un détecteur d'accélération longitudinale et un détecteur de vitesse de roue et détermine à partir des signaux des détecteurs une composante d'accélération due à la gravité ou des grandeurs qui en sont déduites, par exemple la pente du véhicule ou la pente, **en ce qu'**il présente une unité de comparaison (7) dans laquelle la pente du véhicule est comparée à au moins une valeur de seuil, **en ce qu'**il présente une logique (11) de branchement et de débranchement qui commute en mode actif ou inactif l'unité (5) qui agit sur les freins de service en fonction du résultat de la comparaison et **en ce que** l'unité d'action (5) présente une unité (14) de compensation de pente qui détermine la pression de compensation et l'ajoute à la pression de freinage HDC appliquée sur les freins de service.

Fig. 1

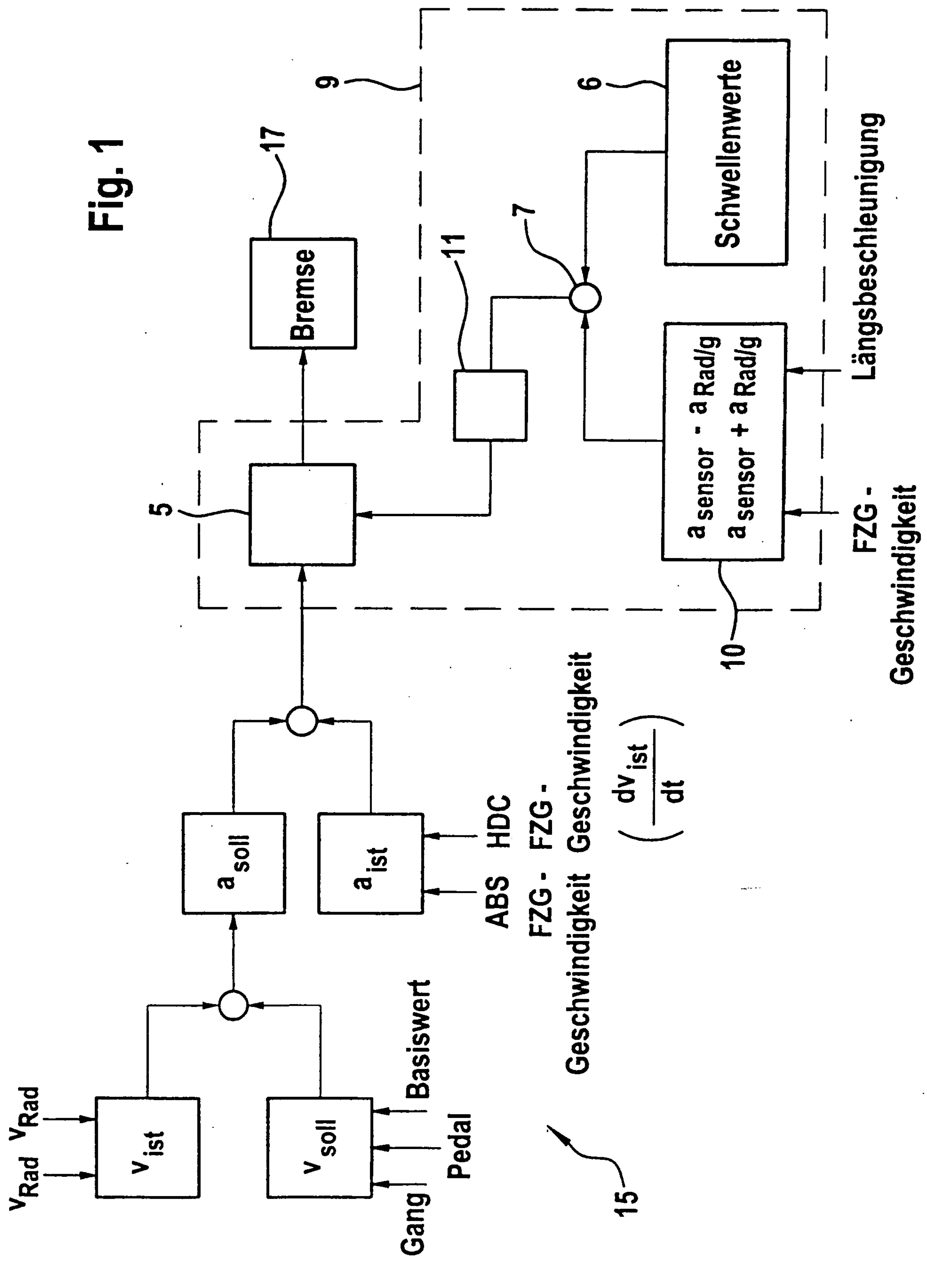

$v_{Rad}$
$v_{Rad}$
$v_{ist}$
$v_{soll}$
Gang
Pedal
Basiswert
15
$a_{soll}$
$a_{ist}$
ABS
HDC
FZG - Geschwindigkeit
FZG - Geschwindigkeit
$\left(\frac{dv_{ist}}{dt}\right)$
5
Bremse
17
9
11
7
6
Schwellenwerte
$a_{sensor} - a_{Rad/g}$
$a_{sensor} + a_{Rad/g}$
10
FZG - Geschwindigkeit
Längsbeschleunigung

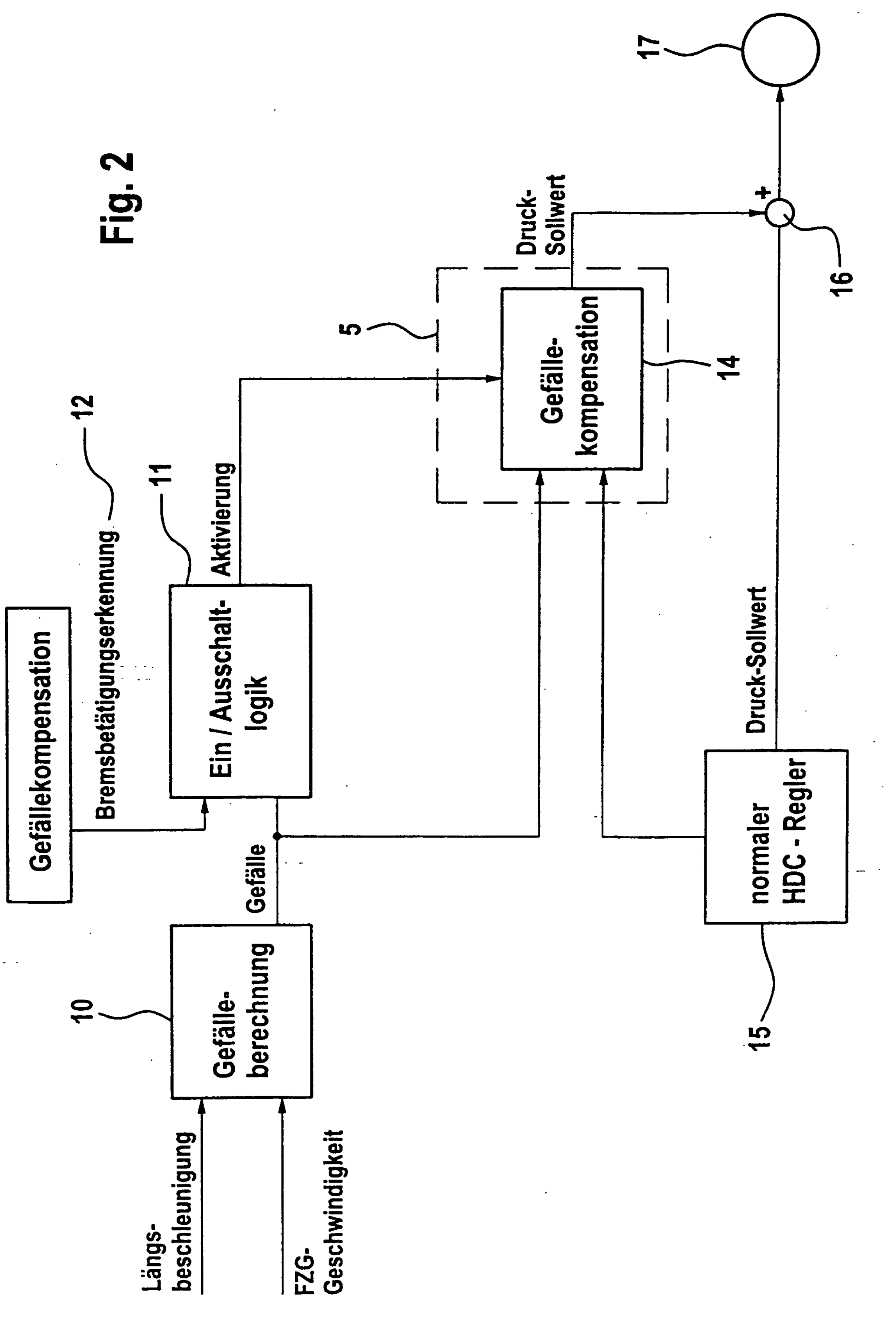
Längs-
beschleunigung
FZG-
Geschwindigkeit
10
Gefälle-
berechnung
Gefälle
Gefällekompensation
Bremsbetätigungserkennung
12
11
Ein / Ausschalt-
logik
Aktivierung
5
Gefälle-
kompensation
14
Druck-
Sollwert
+
16
17
Druck-Sollwert
normaler
HDC - Regler
15

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9611826 A1
- WO 9611862 A